# FASCICULE DE BREVET EUROPEEN

(11) **EP 1 954 374 B1**
(45) Date de publication et mention de la délivrance du brevet: **19.12.2012**
(21) Numéro de dépôt: 06842065.2
(22) Date de dépôt: 29.11.2006
(51) Int. Cl.: B01D 46/24

(54) **STRUCTURE A BASE DE CARBURE DE SILICIUM DE POROSITE DE SURFACE DE PAROI CONTROLEE POUR FILTRATION D'UN GAZ**
AUF SILIZIUM-CARBID BASIERENDEN STRUKTUR MIT GESTEUERTER OBERFLÄCHENPOROSITÄT ZUR FILTRIERUNG EINES GASES
STRUCTURE BASED ON SILICON CARBIDE WITH A CONTROLLED WALL SURFACE POROSITY FOR THE FILTRATION OF A GAS

(30) Priorité: 30.11.2005 FR 0553665
(43) Date de publication de la demande: 13.08.2008
(73) Titulaire: Saint-Gobain Centre de Recherches et d'Etudes Européen, 92400 Courbevoie (FR)
(72) Inventeur: BARDON, Sébastien, F-75020 Paris (FR); GLEIZE, Vincent, Marc, F-84000 Avignon (FR); GIROT, Patrick, Jacques, Dominique, F-84000 Avignon (FR)
(74) Mandataire: Jamet, Vincent
(86) Numéro de dépôt international: PCT/FR2006/051254
(87) Numéro de publication internationale: WO 2007/063249

(56) Documents cités:
- EP-A- 1 142 619
- EP-A- 1 264 971
- EP-A- 1 514 588

## Description

L'invention se rapporte au domaine des structures filtrantes comprenant éventuellement une composante catalytique, par exemple utilisées dans une ligne d'échappement d'un moteur à combustion interne du type diesel.

Les filtres permettant le traitement des gaz et l'élimination des suies typiquement issues d'un moteur diesel sont bien connus de l'art antérieur. Ces structures présentent toutes le plus souvent une structure en nid d'abeille, une des faces de la structure permettant l'admission des gaz d'échappement à traiter et l'autre face l'évacuation des gaz d'échappement traités. La structure comporte, entre les faces d'admission et d'évacuation, un ensemble de conduits ou canaux adjacents d'axes parallèles entre eux séparés par des parois poreuses. Les conduits sont obturés à l'une ou l'autre de leurs extrémités pour délimiter des chambres d'entrée s'ouvrant suivant la face d'admission et des chambres de sortie s'ouvrant suivant la face d'évacuation. Les canaux sont alternativement obturés dans un ordre tel que les gaz d'échappement, au cours de la traversée du corps en nid d'abeille, sont contraints de traverser les parois latérales des canaux d'entrée pour rejoindre les canaux de sortie. De cette manière, les particules ou suies se déposent et s'accumulent sur les parois poreuses du corps filtrant.

A l'heure actuelle, on utilise pour la filtration des gaz des filtres en matière céramique poreuse, par exemple en cordiérite, en alumine, en mullite, en nitrure de silicium, en un mélange silicium/carbure de silicium ou en carbure de silicium.

De façon connue, durant son utilisation, le filtre à particules est soumis à une succession de phases de filtration (accumulation des suies) et de régénération (élimination des suies). Lors des phases de filtration, les particules de suies émises par le moteur sont retenues et se déposent à l'intérieur du filtre. Lors des phases de régénération, les particules de suie sont brûlées à l'intérieur du filtre, afin de lui restituer ses propriétés de filtration. Un critère important intervenant dans la mise en oeuvre d'un filtre, par exemple dans une ligne d'échappement d'un moteur, est donc sa résistance thermomécanique.

Il est connu par ailleurs que l'introduction d'un filtre à particules tel que précédemment décrit dans la ligne d'échappement du moteur entraîne une perte de charge susceptible d'altérer les performances de celui-ci. Le filtre doit en conséquence être configuré de manière à éviter une telle altération.

Un autre critère déterminant pour la sélection des structures filtrantes éventuellement catalytiques précédemment décrites est leur temps de dépôt de suie. Ce temps correspond à la durée nécessaire au filtre pour qu'il atteigne son niveau maximal d'efficacité de filtration, lors de sa première mise en oeuvre ou après une phase de régénération. Il est supposé que ce temps est fonction en particulier de la mise en place d'une quantité suffisante de suie dans la porosité du filtre pour bloquer la traversée directe des fines particules de suies à travers les parois du filtre. L'une des conséquences directes d'un temps de dépôt de suies non adapté est l'apparition de fumées noires persistantes et nocives, ainsi que la présence de traces de suies à la sortie de la ligne d'échappement, sur un filtre neuf ou après une phase de régénération. Il est bien évident que pour des questions d'environnement, d'image et de confort d'utilisation, les constructeurs automobiles souhaitent que l'apparition de tels phénomènes soit supprimée ou au moins minimisée sur les véhicules équipés de tels filtres.

La mise en place du dépôt de suie est un phénomène mal connu, sans doute du fait que la masse de dépôt n'est pas mesurable en temps réel sur un filtre en cours de sollicitation. Seul est en effet accessible le temps de dépôt de suie mesuré indirectement à partir de l'analyse du taux de particules présents dans les gaz d'échappement en sortie du filtre.

La présente invention se rapporte au domaine des filtres en carbure de silicium de préférence obtenus par frittage/recristallisation (R-SiC). Des exemples de filtres catalytiques selon l'invention sont par exemple décrits dans les demandes de brevets EP 816 065, EP 1 142 619, EP 1 455 923 ou encore WO 2004/065088 auquel on se référera pour plus de précisions sur leur structure ou leur mode de synthèse. Les structures selon l'invention peuvent être des structures simples monolithiques ou préférentiellement des structures assemblées plus complexes, obtenues le plus souvent par l'association de plusieurs éléments monolithiques, liés par un ciment dit de joint.

Le but de la présente invention est ainsi de fournir une structure en nid d'abeille d'un type nouveau, comprenant éventuellement une composante catalytique, permettant de répondre à l'ensemble des problèmes précédemment exposés.

L'invention concerne ainsi une structure filtrante combinant, pour une efficacité maximale de filtration et une utilisation de longue durée, les propriétés suivantes :
- une perte de charge minimale en fonctionnement, typiquement sur une ligne d'échappement d'un moteur à combustion interne,
- une résistance thermomécanique suffisante pour résister aux contraintes de fonctionnement du filtre,
- une efficacité de filtration optimisée dès la mise en oeuvre du filtre, ou après une phase de régénération, se traduisant par un temps de dépôt des suies minimisé.

Une telle structure trouve notamment son application comme filtre à particules dans une ligne d'échappement d'un moteur diesel ou éventuellement essence.

Dans sa forme la plus générale, la présente invention se rapporte à une structure de filtration de gaz chargés en particules, du type en nid d'abeilles et comprenant un ensemble de conduits ou canaux adjacents d'axes parallèles entre eux séparés par des parois poreuses, lesquels conduits étant obturés par des bouchons à l'une ou l'autre de leurs extrémités pour délimiter des chambres d'entrée s'ouvrant suivant une face d'admission des gaz et des chambres de sortie s'ouvrant sur une face d'évacuation des gaz, de telle façon que le gaz à filtrer traverse les parois poreuses, ladite structure se caractérisant en ce que le matériau à base de carbure de silicium constituant lesdites parois présente :
- une porosité ouverte comprise entre 30 et 53%, de préférence entre 40 et 50%, et de manière très préférée entre 43 et 49 %,
- un diamètre de pore médian compris entre 9 et 20 µm, de préférence entre 12 et 18 µm,
et en ce que :
- le nombre moyen des pores ouverts à la surface des parois, dont la surface d'ouverture est comprise entre 20 et 310 µm², est supérieur à 300/mm² de paroi, de préférence supérieur à 350/mm² de paroi,
- le ratio entre la surface totale d'ouverture desdits pores ouverts et ladite surface des parois est compris entre 0,15 et 0,30, de préférence entre 0,20 et 0,27.

Par matériau à base de SiC, il est entendu au sens de la présente description que ledit matériau comprend au moins 30% de SiC en masse, de préférence au moins 70% de SiC en masse et de manière très préférée au moins 98% de SiC en masse.

Par diamètre médian de pores, il est entendu au sens de la présente description le diamètre de pores pour lequel 50% en volume de pores est inférieur ou égal à cette taille de pores.

Les pores ouverts à la surface des parois dont la surface d'ouverture est comprise entre 20 et 310 µm² sont, au sens de la présente description, les pores dont la surface d'ouverture sur les canaux correspond approximativement à la surface d'un disque parfait dont le diamètre est compris entre environ 5 µm et environ 20 µm.

La structure selon l'invention peut en outre comprendre un revêtement catalytique pour le traitement des gaz polluants du type CO ou HC, par exemple présent à la surface et dans la porosité des parois.

L'épaisseur des parois des structures selon l'invention est typiquement comprise entre 200 et 500 µm.

En général, la distribution des tailles de pore est du type unimodale.

Selon un variante préférée de l'invention la présente structure filtrante comprend une pluralité d'éléments filtrants en nid d'abeille reliés entre eux par un ciment de joint, le nombre de canaux étant par typiquement de l'ordre de 7,75 à 62 par cm², lesdits canaux ayant une section de 0,5 à 9 mm².

L'invention se rapporte également au procédé de fabrication des structures filtrantes à base de SiC précédemment décrites, comprenant une étape de malaxage du mélange initial avec au moins un agent porogène, de préférence choisi dans le groupe constitué par le polyéthylène, le polystyrène, l'amidon, le graphite, par exemple tels que décrits dans les demandes JP 08-281036 ou EP 1 541 538. Le malaxage résulte en un produit homogène sous la forme d'une pâte liée. Le procédé comprend en outre une étape d'extrusion dudit produit à travers une filière appropriée de manière à former des monolithes de forme nid d'abeilles, une étape de séchage des monolithes obtenus, éventuellement une étape d'assemblage et une étape de cuisson. Le procédé se caractérise en ce qu'on contrôle au moins un des paramètres compris dans le groupe constitué par la granulométrie des grains du mélange initial, la nature et la quantité du ou des agents porogènes, la température de cuisson, pour obtenir ladite structure.

Selon un mode de mise en oeuvre possible, le carbure de silicium est introduit sous la forme d'une poudre présentant au moins deux types de granulométrie par exemple sous la forme d'une première population de grains dont le diamètre médian est compris entre 10 et 100 µm, de préférence entre 10 et 50 µm et d'une deuxième population de grains dont le diamètre médian est compris entre 0,1 et 10 µm, de préférence entre 0,1 et 5 µm.

Avantageusement, la température de cuisson est ajustée pour les besoins de la présente invention entre 2100 et 2400°C, de préférence entre 2150 et 2300°C.

Le procédé peut en outre comprendre, mais non obligatoirement, une étape de dépôt, de préférence par imprégnation, d'un revêtement catalytique comprenant une phase catalytique active comprenant typiquement au moins un métal précieux tel que Pt et/ou Rh et/ou Pd et éventuellement un oxyde tel que CeO₂, ZrO₂, CeO₂-ZrO₂.

Enfin, la présente invention se rapporte à l'utilisation de la structure précédemment décrite comme filtre à particules dans une ligne d'échappement d'un moteur diesel ou essence.

L'invention et ses avantages seront mieux compris à la lecture des exemples non limitatifs des exemples suivants : les filtres des exemples qui suivent ont été synthétisés à partir d'un mélange initial des quatre constituants suivants :
- constituant A : une première poudre constituée de grains de SiC dont le diamètre médian d₅₀ varie entre 5 et 50 µm, au moins 10% en poids des grains présentant un diamètre supérieur à 5 µm,
- constituant B : une deuxième poudre constituée de grains de SiC de diamètre médian d₅₀ compris entre 0,1 et 10 µm,
- constituant C : un agent porogène du type polyéthylène,
- constituant D : un liant organique du type méthylcellulose.

### Exemple 1 :

Un premier filtre à particule a été synthétisé et testé. Dans un malaxeur, on a d'abord mélangé 50 parties en poids d'un constituant A constitué par une poudre de grains de SiC de diamètre médian d₅₀ d'environ 30 µm, et 50 parties en poids d'un constituant B, dont le diamètre médian des grains de SiC est d'environ 2,5 µm.

Dans un deuxième temps, on a ajouté à ce premier mélange 5% en poids du constituant C par rapport à la masse totale des constituants A et B et 5% en poids du constituant D par rapport à la masse totale des constituants A et B.

On ajoute de l'eau et on malaxe jusqu'à obtenir une pâte homogène et dont la plasticité permet l'extrusion à travers une filière de structures monolithiques en nid d'abeille dont les caractéristiques dimensionnelles sont données dans le tableau 1 :

**Tableau 1**

| Géométrie des canaux | Carré |
|---|---|
| Densité de canaux | 180 cpsi (canaux par inch carré, 1 inch = 2,54 cm) |
| Epaisseur des parois | 350 µm |
| Longueur | 15,2 cm |
| Largeur | 3,6 cm |
| Volume | 2,47 litres |

On sèche ensuite les monolithes crus obtenus par micro-onde pendant un temps suffisant pour amener la teneur en eau non liée chimiquement à moins de 1 % en masse.
On bouche alternativement les canaux de chaque face du monolithe selon des techniques bien connues, par exemple décrites dans la demande WO 2004/065088.
Le monolithe est ensuite cuit selon une montée en température de 20°C/heure jusqu'à atteindre une température de l'ordre de 2200°C qui est maintenue pendant 2 heures.

On obtient finalement une série de monolithes en carbure de silicium dont les caractéristiques microstructurales sont fonction de la composition du mélange initial et des conditions de synthèse.

Les éléments issus d'un même mélange sont ensuite assemblés entre eux par collage au moyen d'un ciment de nature céramique puis usiné, afin de constituer des filtres de diamètre 14,4 cm conformément à l'enseignement de la demande de brevet EP 816 065. Les filtres obtenus selon cet exemple correspondent à l'échantillon 1 du tableau 2.

### Exemple 2 à 12 :

Dans ces exemples, on a reproduit à l'identique le protocole de synthèse des filtres décrit dans l'exemple 1.
Par différence et de façon à modifier les propriétés microstructurales des monolithes obtenus :
- on a utilisé comme constituant A différentes poudres dont le diamètre médian de grains varie entre 5 et 50 µm, au moins 10% en poids des grains composant ces poudres présentant un diamètre supérieur à 5 µm,
- on a utilisé comme constituant B différentes poudres de diamètre médian de grains variant entre 0,1 et 10 µm, et
- on a fait varier les proportions des constituants A et B dans les limites suivantes :
   Constituant A : de 20 à 80 %,
   Constituant B : de 80 à 20 %, pour obtenir un premier mélange comprenant exclusivement (100%) les constituants A et B.

On a ensuite ajouté dans un deuxième temps à chaque mélange A et B les constituants C et D, dans des proportions comprises respectivement entre 3 et 12% et 1 à 20% en poids par rapport à la masse totale des constituants A et B.

Les caractéristiques dimensionnelles des monolithes obtenus après cuisson et des filtres obtenus après assemblage sont identiques à celles données dans l'exemple 1.

Les échantillons obtenus ont été évalués selon trois tests différents :

### A- Mesure du temps de dépôt de suie :

Le temps de dépôt de suie est le temps nécessaire à la mise en place d'une quantité suffisante de suie, sur le filtre neuf ou après une régénération, pour qu'il atteigne son niveau maximal d'efficacité de filtration.
Pour la mesure, on a placé le filtre à tester sur une ligne d'échappement d'un moteur sur banc d'essai. Le moteur utilisé est du type Diesel de cylindrée 2.0 litres. Le filtre est progressivement chargé en suies par le fonctionnement du moteur à un régime de 3000 tr/min à 50 N.m.
Le banc est équipé en sortie d'un système ELPI (Electrical Low Pressure Impactor), connu en soi et qui permet de mesurer en continu la concentration particulaire dans un gaz en temps réel à partir du moment où le filtre se charge. On obtient ainsi une courbe efficacité de filtration en fonction du temps caractérisé par un quasi-palier au bout d'une durée d'essai déterminée. Le palier correspond à une efficacité de filtration supérieure ou égale à 99%. La durée entre le début du chargement du filtre et celui à partir duquel une efficacité au moins égale à 99% est obtenue correspond selon la présente invention au temps de dépôt de suie.

### B- Mesure de la perte de charge :

Par perte de charge, on entend au sens de la présente invention la pression différentielle existant entre l'amont et l'aval du filtre. La perte de charge a été mesurée selon les techniques de l'art, pour un débit d'air de 300 m³/h dans un courant d'air ambiant.

### C- Mesure de la résistance thermomécanique :

Les filtres sont montés sur une ligne d'échappement d'un moteur diesel 2.0 L mis en marche à pleine puissance (4000 tr/minutes) pendant 30 minutes puis démontés et pesés afin de déterminer leur masse initiale. Les filtres sont ensuite remontés sur banc moteur avec un régime à 3000 tr/min et un couple de 50 Nm pendant des durées différentes afin d'obtenir des charges en suies dans le filtre compris entre 1 g/litre et 10 g/l.

Les filtres ainsi chargés sont remontés sur la ligne pour subir une régénération sévère ainsi définie : après une stabilisation à un régime moteur de 1700 tours/minute pour un couple de 95Nm pendant 2 minutes, une post-injection est réalisée avec 70° de phasage pour un débit de post injection de 18mm³/coup. Une fois la combustion des suies initiée, plus précisément lorsque la perte de charge diminue pendant au moins 4 secondes, le régime du moteur est abaissé à 1050 tours/minute pour un couple de 40 Nm pendant 5 minutes afin d'accélérer la combustion des suies. Le filtre est ensuite soumis à un régime moteur de 4000 tours/minute pendant 30 minutes afin d'éliminer les suies restantes.

Les filtres régénérés sont inspectés après découpe pour révéler la présence éventuelle de fissures visibles à l'oeil nu. La masse limite en suie ainsi mesurée, définie comme la masse de suie pour laquelle les premières fissures apparaissent après la régénération sévère, mesure la résistance thermomécanique des filtres.

Les caractéristiques microstructurales des échantillons ont ensuite été mesurées par différentes techniques bien connues de l'art :

### D- Porosimétrie du matériau constituant les parois :

La porosité ouverte du carbure de silicium constituant les parois a été déterminée selon les techniques classiques de porosimétrie à haute pression de mercure, avec un porosimètre de type micromeritics 9500. Les analyses montrent pour tous les échantillons testés une distribution des tailles de pore du type unimodale. Le diamètre médian de pore est déterminé à partir de la distribution cumulée de volume de pores en fonction de la taille de pores, obtenue par mesure de la porosimétrie grâce au porosimètre Mercure.

### E - Analyse par microscopie électronique à balayage MEB:

Le nombre, la nature et les dimensions des pores à surface des parois ont été déterminés par un traitement d'image automatisé pour chaque échantillon à partir de photographies d'une surface de 1 mm² de paroi prises par un microscope à balayage en mode BSE (mode électrons rétrodiffusés).

Les données structurales et les résultats aux différents tests obtenus pour les échantillons représentatifs de l'ensemble des résultats obtenus, sont reportés dans le tableau 2.

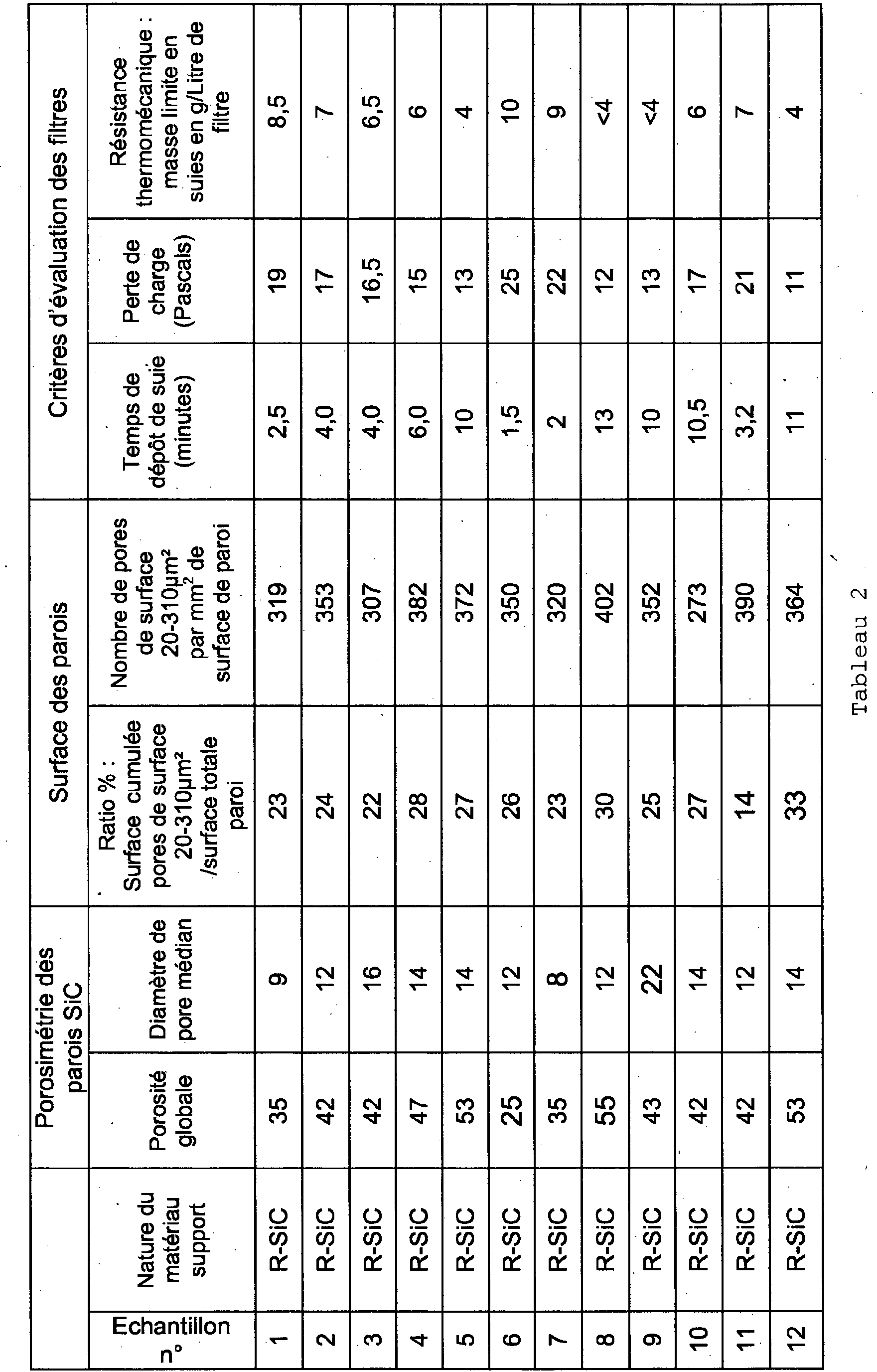

Dans le tableau 2, on observe que les échantillons 1 à 5, répondant aux critères microstructuraux selon l'invention, présentent des résultats satisfaisants aux différents tests d'évaluation, propres à les rendre utilisables comme filtre à particules sur une ligne d'échappement d'un moteur diesel, c'est-à-dire, dans les conditions de la mesure, un temps de dépôt de suies inférieur ou égal à 10 minutes, combinée avec une perte de charge inférieure à 20 pascals et une masse limite en suie supérieure ou égale à 4 g/litre. Les évaluations des échantillons 6 à 9, données à titre comparatif, montrent que des valeurs de porosité ou de diamètre médian de pores non conformes à ceux décrits précédemment ne permettent pas une utilisation de telles structures comme filtre à particules.
En outre, les évaluations des échantillons 10 à 12, également données à titre comparatif, montrent que des surfaces de paroi non conformes à la présente invention ne permettent pas leur utilisation comme filtre à particules.

## Revendications

1. Structure de filtration de gaz chargés en particules, du type en nid d'abeilles et comprenant un ensemble de conduits ou canaux adjacents d'axes parallèles entre eux séparés par des parois poreuses, lesquels conduits étant obturés par des bouchons à l'une ou l'autre de leurs extrémités pour délimiter des chambres d'entrée s'ouvrant suivant une face d'admission des gaz et des chambres de sortie s'ouvrant sur une face d'évacuation des gaz, de telle façon que le gaz à filtrer traverse les parois poreuses, ladite structure **se caractérisant en ce que** le matériau à base de carbure de silicium constituant lesdites parois présente :
- une porosité ouverte comprise entre 30 et 53%, de préférence entre 40 et 50%, et de manière très préférée entre 43 et 49 %,
- un diamètre de pore médian compris entre 9 et 20 µm, de préférence entre 12 et 18 µm,
et **en ce que** :
- le nombre moyen des pores ouverts sur la surface des parois, dont la surface d'ouverture est comprise entre 20 et 310 µm², est supérieur à 300/mm² de paroi, de préférence supérieur à 350/mm² de paroi,
- le ratio entre la surface d'ouverture totale desdits pores ouverts et ladite surface des parois est compris entre 0,15 et 0,30, de préférence entre 0,20 et 0,27.

2. Structure selon la revendication 1 comprenant en outre un revêtement catalytique pour le traitement des gaz polluants du type CO ou HC.

3. Structure selon l'une des revendications précédentes, dans laquelle l'épaisseur des parois est comprise entre 200 et 500 µm.

4. Structure selon l'une des revendications précédentes, dans laquelle la distribution des tailles de pore est du type unimodale.

5. Structure filtrante selon l'une des revendications précédentes comprenant une pluralité d'éléments filtrants en nid d'abeille reliés entre eux par un ciment de joint.

6. Procédé de fabrication d'une structure filtrante à base de SiC comprenant une étape de malaxage du mélange initial avec au moins un agent porogène, de préférence choisi dans le groupe constitué par le polyéthylène, le polystyrène, l'amidon, le graphite, résultant en un produit homogène sous la forme d'une pâte liée, une étape d'extrusion dudit produit à travers une filière appropriée de manière à former des monolithes de forme nid d'abeilles, une étape de séchage des monolithes obtenus, éventuellement une étape d'assemblage et une étape de cuisson, ledit procédé étant **caractérisé en ce qu'**on contrôle au moins un des paramètres compris dans le groupe constitué par la granulométrie des grains du mélange initial, la nature et la quantité du ou des agents porogènes, la température de cuisson, pour obtenir une structure selon l'une des revendications 1 à 5.

7. Procédé selon la revendication 6 dans laquelle le carbure de silicium est introduit en mélange sous la forme d'une poudre présentant au moins deux types de granulométrie par exemple sous la forme d'une première population de grains dont le diamètre médian est compris entre 10 et 100 µm, de préférence entre 10 et 50 µm et d'une deuxième population de grains dont le diamètre médian est compris entre 0,1 et 10 µm, de préférence entre 0,1 et 5 µm.

8. Procédé selon l'une des revendications 6 ou 7 dans lequel la température de cuisson est comprise entre 2100 et 2400°C, de préférence entre 2150 et 2300°C.

9. Procédé selon l'une des revendications 6 à 8 comprenant en outre une étape de dépôt, de préférence par imprégnation, d'un revêtement catalytique comprenant une phase catalytique active comprenant typiquement au moins un métal précieux tel que Pt et/ou Rh et/ou Pd et éventuellement un oxyde tel que CeO₂, ZrO₂, CeO₂-ZrO₂.

10. Utilisation d'une structure selon l'une des revendications de 1 à 5 comme filtre à particules dans une ligne d'échappement d'un moteur diesel ou essence, de préférence diesel.

## Claims

1. A structure for filtering particulate-laden gases, of the honeycomb type and comprising an assembly of adjacent ducts or channels, whose axes are parallel to one another, separated by porous walls, said ducts being sealed off by plugs at one or other of their ends so as to form inlet chambers opening onto a gas entry face and outlet chambers opening onto a gas exit face, in such a way that the gas to be filtered passes through the porous walls, said structure being **characterized in that** the material based on silicon carbide constituting said walls has:
- an open porosity of between 30 and 53%, preferably between 40 and 50% and very preferably between 43 and 49%;
- a median pore diameter of between 9 and 20 µm, preferably between 12 and 18 µm;
and **in that**:
- the average number of open pores on the surface of the walls, the opening area of which is between 20 and 310 µm², is greater than 300 per mm² of wall, preferably greater than 350 per mm² of wall; and
- the ratio of the total opening area of said open pores to said area of the walls is between 0.15 and 0.30, preferably between 0.20 and 0.27.

2. The structure as claimed in claim 1, which further includes a catalytic coating for treating pollutant gases of the CO or HC type.

3. The structure as claimed in one of the preceding claims, in which the thickness of the walls is in the range between 200 and 500 µm.

4. The structure as claimed in one of the preceding claims, in which the pore size distribution is of the unimodal type.

5. The filtering structure as claimed in one of the preceding claims, comprising a plurality of filtering elements in a honeycomb bonded together by a sealing cement.

6. A process for manufacturing an SiC-based filtering structure, which comprises: a step of mixing the initial mixture with at least one pore-forming agent, preferably chosen from the group consisting of polyethylene, polystyrene, starch and graphite, resulting in a homogeneous product in the form of a bound paste; a step of extruding said product through a suitable die so as to form honeycomb monoliths; a step of drying the monoliths obtained; and, optionally, an assembly step and a firing step, said process being **characterized in that** at least one of the parameters within the group consisting of the size of the particles of the initial mixture, the nature and the amount of the pore-forming agent(s) and the firing temperature, is controlled so as to obtain a structure as claimed in one of claims 1 to 5.

7. The process as claimed in claim 6, in which the silicon carbide is introduced in the form of a powder into the mixture, said powder having at least two types of particle size, for example in the form of a first population of particles, the median diameter of which is between 10 and 100 µm, preferably between 10 and 50 µm, and a second population of particles, the median diameter of which is between 0.1 and 10 µm, preferably between 0.1 and 5 µm.

8. The process as claimed in either of claims 6 and 7, in which the firing temperature is between 2100 and 2400°C, and preferably between 2150 and 2300°C.

9. The process as claimed in one of claims 6 to 8, which further includes a step of depositing, preferably by impregnation, a catalytic coating comprising an active catalytic phase, typically consisting of at least one precious metal such as Pt and/or Rh and/or Pd, and optionally an oxide such as CeO₂, ZrO₂, CeO₂-ZrO₂.

10. The use of a structure as claimed in one of claims 1 to 5 as a particulate filter in an exhaust line of a diesel or gasoline engine, and preferably of a diesel engine.

## Patentansprüche

1. Struktur zur Filterung von partikelbelasteten Gasen, vom wabenförmigen Typ und umfassend eine Anordnung von benachbarten Leitungen oder Kanälen mit untereinander parallelen Achsen, die durch poröse Wände getrennt sind, wobei die Leitungen an dem einen oder anderen ihrer Enden durch Kappen verschlossen sind, um Eintrittskammern, die sich an einer Fläche zum Zuführen der Gase öffnen, sowie Austrittskammern, die sich an einer Fläche zum Abführen der Gase öffnen, zu begrenzen, derart, dass das zu filternde Gas die porösen Wände durchströmt, wobei die Struktur **dadurch gekennzeichnet ist, dass** das die Wände bildende Material auf der Basis von Siliziumkarbid folgendes aufweist:
- eine offene Porosität zwischen 30 und 53 %, vorzugsweise zwischen 40 und 50 % und in sehr bevorzugter Weise zwischen 43 und 49 %,
- einen mittleren Porendurchmesser zwischen 9 und 20 µm, vorzugsweise zwischen 12 und 18 µm,
und dass:
- die durchschnittliche Anzahl der offenen Poren auf der Fläche der Wände, deren Öffnungsfläche im Bereich zwischen 20 und 310 µm² liegt, mehr als 300/mm² Wand, vorzugsweise mehr als 350/mm² Wand beträgt,
- das Verhältnis zwischen der Gesamtöffnungsfläche der offenen Poren und der Fläche der Wände zwischen 0,15 und 0,30, vorzugsweise zwischen 0,20 und 0,27 liegt.

2. Struktur nach Anspruch 1, die ferner eine katalytische Beschichtung für die Behandlung der Abgase vom Typ CO oder HC umfasst.

3. Struktur nach einem der vorstehenden Ansprüche, wobei die Dicke der Wände im Bereich zwischen 200 und 500 µm liegt.

4. Struktur nach einem der vorstehenden Ansprüche, wobei die Verteilung der Porengrößen vom unimodalen Typ ist.

5. Filterstruktur nach einem der vorstehenden Ansprüche, die eine Vielzahl von wabenförmigen Filterelementen, welche durch einen Fugenzement untereinander verbunden sind, umfasst.

6. Verfahren zur Herstellung einer Filterstruktur auf SiC-Basis, umfassend einen Schritt zum Mischen des Ausgangsgemischs mit wenigstens einem Porenbildner, vorzugsweise ausgewählt aus der Gruppe bestehend aus Polyethylen, Polystyrol, Stärke, Graphit, aus dem ein homogenes Produkt in Form eines gebundenen Breis hervorgeht, einen Schritt zum Extrudieren des Produkts durch eine geeignete Düse, um wabenförmige Monolithen zu bilden, einen Schritt zum Trocknen der erhaltenen Monolithen, eventuell einen Verbindungsschritt und einen Brennschritt, wobei das Verfahren **dadurch gekennzeichnet ist, dass** wenigstens einer der Parameter, die in der Gruppe bestehend aus der Korngröße der Körner des Ausgangsgemischs, der Art und der Menge des oder der Porenbildner(s), der Brenntemperatur enthalten sind, gesteuert wird, um eine Struktur nach einem der Ansprüche 1 bis 5 zu erhalten.

7. Verfahren nach Anspruch 6, wobei das Siliziumkarbid in Form eines Pulvers, das wenigstens zwei Typen von Korngrößen aufweist, beispielsweise in Form einer ersten Gruppe von Körnern, deren mittlerer Durchmesser zwischen 10 und 100 µm, vorzugsweise zwischen 10 und 50 µm liegt, sowie einer zweiten Gruppe von Körnern, deren mittlerer Durchmesser zwischen 0,1 und 10 µm, vorzugsweise zwischen 0,1 und 5 µm liegt, in das Gemisch eingebracht wird.

8. Verfahren nach einem der Ansprüche 6 oder 7, wobei die Brenntemperatur zwischen 2100 und 2400 °C, vorzugsweise zwischen 2150 und 2300 °C liegt.

9. Verfahren nach einem der Ansprüche 6 bis 8, ferner umfassend einen Schritt zum Abscheiden, vorzugsweise durch Imprägnieren, einer katalytischen Beschichtung, die eine aktive katalytische Phase umfasst, welche typischerweise wenigstens ein Edelmetall, wie Pt und/oder Rh und/oder Pd, sowie eventuell ein Oxid, wie CeO₂, ZrO₂, CeO₂-ZrO₂ umfasst.

10. Verwendung einer Struktur nach einem der Ansprüche 1 bis 5, als Partikelfilter in einer Auspuffanlage eines Diesel- oder Benzinmotors, vorzugsweise Dieselmotors.
